Europäisches Patentamt

European Patent Office

Office européen des brevets

(19)

(11) Publication number: **0 165 707 B1**

(12) **EUROPEAN PATENT SPECIFICATION**

(45) Date of publication of patent specification: **23.10.91** (51) Int. Cl.⁵: **C04B 35/56**, C04B 35/58, C04B 35/64, C04B 35/71

(21) Application number: **85303474.2**

(22) Date of filing: **17.05.85**

Divisional application 91102739.9 filed on 17/05/85.

(54) Method of sintering ceramics and metal-dispersed reinforced ceramics obtained thereby.

(30) Priority: **18.05.84 JP 100893/84**
**18.05.84 JP 100894/84**
**18.05.84 JP 100895/84**
**18.05.84 JP 100896/84**

(43) Date of publication of application:
**27.12.85 Bulletin 85/52**

(45) Publication of the grant of the patent:
**23.10.91 Bulletin 91/43**

(84) Designated Contracting States:
**DE FR GB**

(56) References cited:
**DE-C- 1 072 541**
**FR-A- 1 344 240**
**FR-A- 2 401 771**
**GB-A- 892 048**
**US-A- 3 353 954**

**CERAMIC ENGINEERING AND SCIENCE PRO-
CEEDINGS, vol. 4, no. 7/8, July-August 1983,
pages 624-633, Columbus, Ohio, US; P.D.
ZAVITSANOS et al.: "Synthesis of titanium
diboride by a self-propagating reaction"**

(73) Proprietor: **SUMITOMO ELECTRIC INDUSTRIES
LIMITED
No. 15, Kitahama 5-chome, Higashi-ku
Osaka-shi, Osaka 541(JP)**

Proprietor: **Miyamoto, Yoshinari
1-8-37 Midoridai
Kawanishi-shi Hyogo-ken(JP)**

Proprietor: **Yamada, Osamu
Kurotani 513
Yao-shi Osaka(JP)**

Proprietor: **Koizumi, Mitsue
Tamaicho 3-6-22
Toyonaka-shi Osaka(JP)**

(72) Inventor: **Miyamoto, Yoshinari
Kamo 3-3-32
Kawanishi-shi Hyogo(JP)**
Inventor: **Yamada, Osamu
Kurotani 513
Yao-shi Osaka(JP)**
Inventor: **Koizumi, Mitsue
Tamaicho 3-6-22
Toyonaka-shi Osaka(JP)**

CERAMIC ENGINEERING AND SCIENCE PRO-
CEEDINGS, vol. 3, no. 9/10, September-
October 1982, pages 519-528, Columbus,
Ohio, US; J.F. CRIDER "Self-propagating high
temperature synthesis - A Soviet method for
producing ceramic materials"

Metal Handbook, 9 Ed, vol. 7, pages 298-300
and 306

Inventor: **Komura, Osamu**
**Itami Works of Sumitomo Elctric Industries,**
**Ltd.**
**1-1, Koyakita 1-chome Itami-shi Hyogo(JP)**
Inventor: **Kamijo, Eiji**
**Itami Works of Sumitomo Electric Industries,**
**Ltd.**
**1-1, Koyakita 1-chome Itami-shi Hyogo(JP)**
Inventor: **Honda, Masaaki**
**Itami Works of Sumitomo Electric Industries,**
**Ltd.**
**1-1, Koyakita 1-chome Itami-shi Hyogo(JP)**
Inventor: **Yamakawa, Akira**
**Itami Works of Sumitomo Electric Industries,**
**Ltd.**
**1-1, Koyakita 1-chome Itami-shi Hyogo(JP)**

(74) Representative: **Bankes, Stephen Charles Dig-**
**by et al**
**BARON & WARREN 18 South End Kensington**
**London W8 5BU(GB)**

## Description

The present invention relates to a method of sintering ceramics without the need to heat the ceramics to the usual sintering temperature of ceramics powders. The energy used to sinter the ceramics is the reaction heat generated when silicon or a metallic element is reacted with a nonmetallic element to synthesize the ceramics. That is to say, the present invention is of the type wherein the synthesis and sintering are simultaneously completed in one process. The sintered body is densified by pressing it during the synthesis.

Generally speaking, ceramics have been widely used in structural materials and functional materials, that is to say, working tools and sliding parts, which are much less subject to wear than parts made of metals, owing to their superior physical and chemical characteristics such as higher hardness and abrasion resistance in comparison with metals.

In most cases, ceramics have been produced by pressing powders and then sintering the pressed body. Known sintering methods include utilizing the surface energy of powders heated by external heat in air, gas or a vacuum and a method in which substances forming a liquid phase at lower temperatures are added and the sintering progresses by utilizing the surface tension of the liquid phase.

These methods have had the common problem in that since the heat is added to the pressed body from the outside thereof, there is the possibility that the pressed body will break, for example because of the generation of thermal gradients, the trapping of gas within the sintered body or the growth of grains on the surface of the sintered body.

In order to obtain compact ceramic articles, a process for synthesizing the ceramic powders and a process for sintering the ceramic powders thus synthesized have hitherto been required. Accordingly, the process has been very complicated and has taken much time and large energy losses. For example, where a compact SiC article is obtained by the conventional method, at first in the Atison's method of synthesizing powders, $SiO_2$ powders are mixed with C powders, the resulting mixture being pressed in the form of stick, then the stick-like block being electrified to heat thereby synthesizing SiC, and the block being smashed to pieces to obtain SiC powders. Then, an auxiliary combustion agent is added to the SiC powders obtained as described above, the resulting mixture being pressed to the desired form, and the pressed body then being sintered at elevated temperature to obtain a compact SiC article. As described above, since a process for synthesizing ceramic powders and a process for sintering the powders have been used separately in the conventional method, the process has been very complicated and high temperatures of about 2,000°C must be separately obtained in the synthesis of powders and the sintering of powders, so that there has been a problem in that much energy is required.

In addition, in general, an auxiliary sintering agent is added to the material ceramics in order to promote the densification of ceramics in the sintering of ceramics. The quantity of the auxiliary sintering agent added is dependent upon the kind of ceramics. Although the sintering agent has the function of promoting the densification of ceramics, it is liable to remain at the grain boundary and the like and has a bad influence upon the characteristics of the ceramics body after sintering. For example, referring now to the sintering of $Si_3N_4$, MgO and $Al_2O_3$ added as the auxiliary sintering agent remain at the grain boundary of $Si_3N_4$ in the form of a glassy phase also after sintering, so that there is a disadvantage in that the glassy phase on the grain boundary is softened, thereby reducing the strength at high temperatures exceeding 1,000°C.

Furthermore, since the ceramic powders and particles can not be plastically deformed differently from metallic powders, the pressed body is densified to an extent of at most 70 % of the theoretical density thereof even when pressed under high pressures. For example, when SiC powders and iron powders are pressed under the pressure of 5 tonne/cm² (490.33 MPa) by the cold hydrostatic forming, the pressed body of iron powders can be densified to 95 % of the theoretical density thereof while the pressed body of SiC powders can be densified only to 65 % of the theoretical density thereof. As described above, the pressed body of ceramic powders has a lower density prior to the sintering, so that the densification by the sintering leads to a great difference in size between before and after the sintering thereby it is difficult to accurately control the dimensional accuracy of the sintered body. When the above described SiC having the density of the pressed body of 65 % is sintered under the normal pressure to densify to the almost theoretical density thereof, the contraction percentage amounts to 13.3 % calculated for one side. For this reason, at present, the improvement of the sintered body in dimensional accuracy relies upon the working after the sintering.

In addition, referring to the working of ceramics, the sintered body of ceramics is very hard in general in comparison with metals, so that it must be worked by grinding by means of a diamond grindstone at present thereby it is remarkably difficult to work the sintered ceramics into the complicated shape. For this reason, in order to obtain ceramic articles having the complicated shape, it is necessary to give the desired shape to the ceramic articles before they are sintered. Even in this case, a large number of problems occur in that it is difficult to work the pressed body of ceramic powders, the useful lifetime of tools used for adjusting the shape of the pressed body being remarkably short due to the high hardness of ceramic powders, and the like.

As described above, according to the conventional method of producing ceramic articles, a remarkably large number of processes including a process for synthesizing ceramic powders, a sintering process and a working process are required, it taking much time, and an energy loss being increased. The assistant sintering agent added for promoting the sintering of ceramic powders is apt to damage the proper characteristics of ceramics. Since it is impossible to sufficiently increase the density of the pressed body of ceramic powders, the percentage contraction of the pressed body of ceramic powders in the sintering process is large and it is therefore difficult to control accurately the dimensions of the sintered body of ceramic powders. That is to say, a large number of problems have occurred in that it is difficult to work not only the pressed body of ceramic powders but also the sintered body.

In addition, strength and toughness are the most important problems in the use of ceramics. The strength and toughness are related to the reliability of materials.

Most ceramics have covalent bonds and thus have an elastic modulus several times that of metals, greatly reducing their capacity not only for elastic deformation but also for plastic deformation.

For this reason, the sintered body of ceramic powders is remarkably sensitive to internal defects, so that when once the cracks start to grow, it is almost impossible to stop the growth of the cracks and the body is liable to break at one stroke. Ceramics differ greatly from metals in this respect. Accordingly, various attempts have been made to overcome such brittleness of ceramics.

One of them is an attempt to stop the growth of cracks by giving the pointed end of cracks the compression stress using the volume expansion accompanied by the phase transformation of a ceramics dispersed phase. This is represented by partially stabilized $ZrO_2$. However, according to this method, the phase transformation is brought on with an elevation of temperature before the stress is given thereby the mechanism of reinforcement disappears.

Another one of them is the reinforcement by bonding ceramic particles with the metallic boundary phase among themselves. This is represented by cermets. According to this method, although the damping effect against an impact is superior due to the existence of a highly tough metallic phase among ceramic particles, the boundary phase is softened at high temperatures thereby the strength of cermets as a whole is suddenly reduced.

Also the reinforcement utilizing the mechanism of fiber-reinforcement, in which the breaking energy is increased by dispersing ceramic fibers of the kind different from that of ceramics of the matrix in the matrix of ceramics to branch the growth of cracks, has been investigated. However, an art for uniformly dispersing ceramic fibers in the matrix of ceramics is difficult. In addition, also the intimacy of the ceramic fibers with the ceramics of the matrix has not been sufficiently made clear, so that this method has not reached the practically usable stage.

As described above, although various kinds of means have been taken in order to improve ceramics, which are available at present, in toughness, they are insufficient yet or sacrifice the characteristics other than toughness.

Thinking the conventional arts in respect of production method, in order to obtain ceramics, which are disclosed in the present invention, having such structure that spherical metallic particles are dispersed in the matrix of ceramics by the conventional method, in general the mixture comprising ceramic powders and metallic powders is sintered under high pressures. However, the sintering temperature of ceramics is apt to be higher than the melting points of metals and in such cases metals are molten during the sintering process to form such structure that metals are buried among ceramic particles thereby the structure according to the present invention, in which spherical metallic particles are dispersed in the matrix of ceramics, can not be obtained. Even in such cases that the melting points of metals are higher than the sintering temperatures of ceramics to the contrary, if the intimacy of ceramic particles with metallic particles is poor, the densification of ceramics is hindered thereby remaining a large number of voids within the sintered body. In addition, there is the great possibility that the unification of metallic particles among themselves is made progress with an increase of volume ratio of metals thereby the structure, in which metals are minutely and uniformly distributed, can not be obtained but such structure that larger metallic particles are nonuniformly distributed is obtained.

As described above, according to the conventional sintering methods, it has been difficult to obtain highly tough ceramics according to the present invention containing spherical metallic particles minutely and uniformly dispersed therein.

The composite materials comprising metals and ceramics such as nitrides, carbides, borides and silicides in combination have a high utility value for the materials having excellent workability and high toughness incidental to metals together with high heat resistance, corrosion resistance and abrasion resistance incidental to ceramics. In addition, in the production of parts, which are complicated in shape and difficultly produced from ceramics alone, the production cost may be reduced by making of ceramics only those parts which are required to function as ceramics.

To such objects, the conventional methods of producing the composite materials comprising metals and ceramics have included the "ceramics-coating" method and the "melting-spray" method. However, these methods have the defects in that it is difficult to form a thick layer and it is expensive.

A method of producing the composite materials by bonding metals to the preliminarily produced sintered body of ceramics has also been proposed. However, it is difficult to bond metals to ceramics, so that such a method has not yet been practically used.

According to a first aspect of the invention, there is provided a method of making a sintered ceramics body which comprises reacting a powder of at least one first element selected from silicon and metals of groups III, IVa, Va and VIa of the Periodic Table and at least one non-metallic second element, different from the first and selected from boron, carbon, nitrogen and silicon, by mixing the reactants, pressing the mixture to form a body, and heating a part of the pressed body to initiate an exothermic synthetic reaction between said metallic and non-metallic powders and/or an exothermic reaction between said metallic powder and atmospheric gases and/or liquids, whereby the heat of reaction causes simultaneous sintering of the reaction product to produce a wholly sintered ceramics body, characterised in that the pressed body is locally heated from within to initiate the reaction, thereby causing the reaction to progress continuously towards the surface of the pressed body.

In the process of the present invention, the synthesis of ceramics and the production of a compact sintered body are effected simultaneously by utilizing the reaction heat generated when ceramics are synthesized from the mixture of elements, which processes can be effected by localised heating within the pressed body to temperatures substantially lower than the usual sintering temperature.

For example, in the reaction to synthesize TiC from Ti and C, the reaction heat of 55.3 Kcal/mol is generated with the formation of TiC, as shown in the following equation 1):

$$Ti + C \rightarrow TiC + 55.3 \ Kcal/mol \ (298\degree K) \qquad (1)$$

Accordingly, if a part of a compactly pressed body of a powdery mixture comprising Ti and C is ignited by heating to compulsorily start the reaction of the equation (1), the parts adjacent to the ignited part start the reaction in turn by the reaction heat and the chain reaction makes progress all over the pressed body of powders whereby the synthesis and sintering of ceramics are simultaneously completed.

Accordingly, by means of the present invention, the compact sintered body of ceramics can be obtained very simply in comparison with a conventional method in which the synthesis and sintering of ceramic powders are carried out in the separate processes.

In addition, although a special electric furnace capable of producing high temperatures of about 1,500 to 2,000°C with controlling an atmosphere was required in the conventional method in order to sinter ceramics in the process of the present invention, almost all of the energy required for sintering the ceramics is obtained from the reaction heat generated when the ceramics are synthesized, so that only the vessel for controlling the atmosphere and an ignition apparatus for starting the synthetic reaction are required, with no other heating mechanism. The apparatus required for sintering ceramics is thus remarkably simplified in a simultaneous synthesizing and sintering method according to the present invention. In addition, even when the amount of the reaction heat generated in the synthesis is so small as to cause difficulty in making the chain reaction progress, depending upon the combination of the metallic elements and the non-metallic elements, so that a preliminary heat input is required, temperatures remarkably lower in comparison with the conventional sintering temperature are sufficient. Accordingly, a simultaneous synthesizing and sintering method according to the present invention represents a considerable advance in respect of energy saving. The simultaneous synthesizing and sintering methods for producing a compact sintered body are classified into two methods. One of them is a method in which the ignition is carried out under high pressures in a high-pressure generating apparatus and the synthesis and sintering are simultaneously carried out with the assistance of high pressures. Either uniaxial pressing or isotropic hydrostatic pressing may be used. The other is a method in which high pressures are given prior to the sintering process by the uniaxial pressing method or the isotropic hydrostatic pressing method and then the ignition is effected to simultaneously synthesize and sinter ceramics. When the mixture comprising metallic elements and non-metallic elements is pressed under high pressures, the powders themselves are plastically deformed, so that they may be initially densified to 90% or more of the theoretical density. Accordingly, the dimensional change in the simultaneous synthesizing and sintering process is small thereby it is easy to control precisely the dimensional accuracy of the sintered body.

On the other hand, in the case where ceramic powders are sintered, the density of the pressed body of powders can be increased only to 70% or less of the theoretical density thereof, so that the contraction percentage is large and it is difficult to control precisely the dimensional accuracy of the sintered body.

Furthermore, even in the case where the pressed body of powders is worked into the desired shape prior to the sintering process in order to obtain ceramic articles which are complicated in shape, the pressed body of the mixture comprising metallic elements and non-metallic elements is compact and soft, unlike ceramic powders, so that the articles, which are complicated in shape, can be worked in high accuracy. Also the tools used for adjusting the shape can be used in the same manner as for the working of ordinary metals.

According to the present invention, metallic elements are combined with non-metallic elements to synthesize ceramics and simultaneously directly obtain the sintered body, so that an auxiliary sintering agent is not necessary. Accordingly, a compact sintered body of ceramics of high purity and high density can be obtained without damaging the characteristics incidental thereto. Furthermore, the sintering method according to the present invention is most suitable for making ceramics to be used in applications wherein the existence of impurities must be avoided.

If a carbon heater is used for the ignition, the ignition area and ignition pattern can be optionally changed, so that the use of the carbon heater is remarkably advantageous for uniformly sintering the articles which are complicated in shape. High-frequency induction heating, electron-beam heating, laser heating, heating using an auxiliary combustion agent and the like may also be used for the ignition in addition to the above described heating by the carbon heater.

Furthermore, the diameter of the crystalline particles of the sintered body can be controlled by changing the ignition area and the pressure in the sintering process. The growth of the crystalline particles is increasingly suppressed with an increase in pressure in the simultaneous synthesizing and sintering process, making it easier to obtain a compact sintered body composed of uniform and minute crystalline particles.

If the reaction heat generated when metallic elements are combined with non-metallic elements to synthesize ceramics is too large, the sintering temperature cannot be controlled and the reaction may progress explosively, reaching superhigh temperatures of about 4,000$^\circ$C in some circumstances. This will give rise to decomposition and vaporization of the ceramics and the abnormal growth of the crystalline particles in the sintered body, resulting in a large number of defects. Accordingly, in cases where the reaction heat generated when the ceramics are formed is large, a compact sintered body composed of uniform and minute crystalline particles can be obtained by adding powders of ceramics of the same kind as the ceramics to be synthesized, or powders of a different kind of ceramics, to dilute the synthetic reaction and enable the amount of the reaction heat to be controlled as the reaction progresses.

The mixture to be sintered may contain metals at a ratio larger than the stoichiometric ratio, and metallic particles remaining non-reacted after the sintering process being uniformly dispersed in the matrix of ceramics.

The problem of the melting points of metals and the sintering temperature can be solved in accordance with the present invention, even in the case where the temperature for simultaneously synthesizing and sintering ceramics is higher than the melting point of metal. The metallic particles adjacent to the non-metallic elements are turned into ceramics from the surface thereof to the inside thereof in turn as the synthesis of the ceramics progresses, so that, even though temperatures exceeding the melting point of metal are reached temporarily, the metal is molten within the shell of ceramics and does not flow out of the shell. Accordingly, after cooling, a structure can be obtained containing spherical metallic particles dispersed in the matrix of ceramics therein.

For example, in the case where a composite material containing spherical metallic Ti particles dispersed in the matrix of $TiB_2$ is produced, a reaction heat of 70.0 Kcal/mol is generated when $TiB_2$ is formed, as shown in the following equation (2):

$$Ti + 2B \rightarrow TiB_2 + 70.0 \text{ Kcal/mol } (298^\circ K) \quad (2)$$

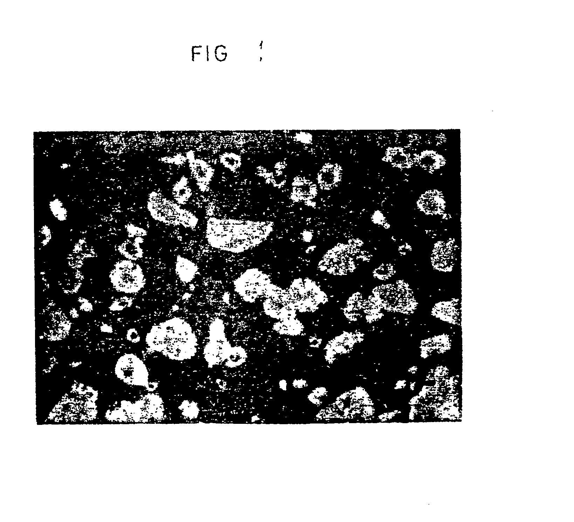

Accordingly, if a part of the powdery mixture comprising Ti powders and B powders with the former at a larger than stoichiometric ratio is ignited by heating to initiate forcibly the reaction of the equation (2) with the powdery mixture under pressure, the parts adjacent to the ignited part start the reaction in turn by the reaction heat and the chain reaction makes progress throughout the pressed body of powders to complete the simultaneous synthesis and sintering of ceramics. It appears that temperatures exceeding 2,000$^\circ$C are reached temporarily when $TiB_2$ is formed. Accordingly, although there is the possibility that non-reacted Ti from that added at a larger than stoichiometric ratio is temporarily molten, the outer shell of metallic Ti is turned into $TiB_2$ to prevent molten Ti from flowing out between particles, so that, after cooling, a structure is obtained containing spherical particles of metallic Ti dispersed in the grey matrix of ceramics therein as shown in the accompanying drawing. This shows the state of the particles of metallic Ti dispersed in the matrix of $TiB_2$.

As to the intimacy of the ceramics as the matrix with the metallic particles dispersed in the matrix, since the metallic particles are turned into ceramics from their surface thereof towards their inside and the ceramics in the outer shell are sintered to form the matrix, the intimacy of the matrix with the dispersed particles is remarkably superior and the dispersed particles are also strongly chemically bonded to the matrix.

As also shown in the drawing, the dispersed metallic Ti particles are strongly bonded to the $TiB_2$ matrix without forming any gaps therebetween.

Furthermore, according to the simultaneous synthesizing and sintering method of the present invention, since the excess non-reacted portion of Ti is isolated by the outer shell of $TiB_2$ during the sintering process, there is the small possibility that the excess non-reacted portions of Ti may be brought into direct contact with each other. It is therefore advantageous if the metallic particles do not reach a large size. As is also shown in the drawing, almost all the dispersed metallic Ti particles exist independently.

Metal-dispersed reinforced ceramics produced in the above described manner contain ceramics as the matrix, so that not only do they have remarkably high hardness and superior abrasion resistance but they also have remarkably improved impact resistance since the dispersed metallic particles act as a cushion against the impact. In addition, there is a strong possibility that the sliding characteristics can be improved by dispersing metallic particles having lower hardnesses in a matrix having higher hardnesses. In fact, as to the friction factor, the metal dispersed reinforced ceramics have the friction factor less than that of ceramics without the dispersed metallic particles therein.

Also, as to the high-temperature strength, although the cermets have a disadvantage that the high-temperature strength is suddenly lowered by the softening of the metallic grain boundary phase existing among the ceramic particles, the metal-dispersed reinforced ceramics according to the present invention contain ceramics as skeletons existing among particles, so that the rate of the reduction in strength and hardness at high temperatures is remarkably small in comparison with that of the cermets.

Also as to the corrosion resistance, although the cermets containing metals in the continuous grain boundary have a disadvantage that the metallic grain boundary phase is preferentially corroded by acids and alkalis, so that the bond among ceramic powders is broken, rendering the material useless, the metal-dispersed reinforced ceramics according to the present invention are remarkably improved also in corrosion resistance since the matrix is a corrosion-resistant ceramics and the circumference of metallic particles, which have little resistance against corrosion, is protected with the matrix composed of ceramics and thus not directly contacting with any corrosive atmosphere.

As described above, the metal-dispersed reinforced ceramics according to the present invention have the advantages of high hardness, superior abrasion resistance, superior high-temperature characteristics and superior corrosion resistance, normally associated with ceramics together with further advantages, such as high toughness and superior impact resistance, associated with metals.

In addition, the present invention is based on the discovery from various investigations aimed at obtaining ceramics having a uniform composition and structure, that the disadvantages of the sintered body according to the prior art can be overcome more effectively by making the sintering process progress from the inside of the pressed body. That is to say, it has been found from experiments carried out on the formation of most ceramics by the exothermic reaction that if once the reaction is started within the pressed body, the reaction progresses continuously to the surface of the pressed body without the need for external heat input, or with only slight heating, to obtain the sintered body.

The sintered body obtained according to the present invention includes carbides such as SiC, TiC, ZrC, HfC, VC, NbC, $Ta_2C$ and TaC; nitrides such as $Mg_3N_2$, BN, AlN, $Si_3N_4$, TiN, ZrN, HfN, VN, NbN and TaN; borides such as $TiB_2$, $ZrB_2$, $HfB_2$ and $TaB_2$; silicides such as $TiSi_3$, ZrSi, $ZrSi_2$ and $MoSi_2$; mixtures comprising at least two of these compounds and the compounds having indefinite ratios obtained from the above described compounds.

To make a pressed body containing a carbide there can be used for example a mixture comprising metallic elements and carbon or a mixture of metal oxides and carbon. For nitrides, it is necessary only to carry out the reaction in an atmosphere of nitrogen gas.

It goes without saying that metal carbonitrides can be obtained by the reaction of metallic elements with carbon in an atmosphere of nitrogen gas or ammonia gas.

The composite for the pressed body is obtained by forming the powdery mixture in the usual manner but it is desirable to control the density of the pressed body from the point of view of reactivity. That is to say, in the case where the reaction with an atmosphere is not required, the high-pressure pressing is generally adopted while in the case where the reaction with an atmosphere is required, a pressed body of low density is prepared.

The sintering of the pressed body progresses from within by heating a heater buried in the part of the pressed body at which the reaction is to be started. In addition, external heat may be added at an outer portion of the body to enhance the sintering process and/or to continue the reaction.

The sintered body obtained may also be reheated to effect further sintering and HIP may be carried out.

In addition, the present invention includes a method of producing a composite comprising metals and ceramics wherein the pressed body layer comprising the powdery mixture includes a stoichiometric excess of metal and the chain reaction induced within the pressed body by the reaction heat forms a ceramic layer, simultaneously adhering the resulting ceramic layer to the surface of metallic particles to give a composite body comprising metals and ceramics.

The powdery mixtures which can be used for forming the pressed body layer include mixtures of metallic elements and carbon or the mixture of metal oxides and carbon in the case where the ceramics to be formed are carbides, combinations of metallic elements or metal oxides and silicon or $SiO_2$ being effective in the case where the ceramics to be formed are silicides, and combinations of metallic elements or metal oxides and boron being available in the case where the ceramics to be formed are borides. On the other hand, in the case where the ceramics to be formed are nitrides, the pressed body of metallic elements or metal oxides are reacted with nitrogen gas or ammonia gas.

It is important in cases where the sintered body includes metallic particles, for the ceramics formed by the reaction to be strongly bonded to the metallic layer.

The present inventors have found that a composite in which the ceramic layer is adhered to the surface of the metal could be formed by holding the pressed body layer of the powdery mixture under pressure to start the reaction in the pressed body layer of the powdery mixture. The mechanism for adhering the ceramic layer to the metallic surface includes the following two mechanisms: One of them is the mechanism to which a part of the metallic surface adjacent to the powdery mixture layer for forming ceramics is melted by the reaction heat generated during the formation of ceramics and enters interstices in the pressed body of the powdery mixture under the capillary force, and the pressure built up in the spaces between the particles of the powdery mixture and metals and simultaneously the reaction of the pressed body of the powdery mixture is brought on to form ceramics so that the ceramic layer adheres to the metallic surface.

This mechanism proceeds when the metals are hardly reacted with the mixture for forming ceramics and the melting points of the metals are comparatively low.

There is also a mechanism in which a supplementary ceramic layer is formed on the interface between the metals and the ceramics formed, brought on when the chemical reaction of the metals with the mixture for forming ceramics is violent.

The present invention will be described in more detail in the following examples.

Example 1

Ti powders are mixed with C powders (carbon powders) at a molar ratio of 1 : 1 and then the resulting powdery mixture is pressed by a CIP method at a pressure of 5 t/cm² (490.3 M Pa) to form a pressed body having a size of 30 ∅ x 30 H mm. The pressed body, provided with a carbon heater buried in a hole formed therein, is placed in a vacuum tank. The heater is electrified from outside to initiate the reaction of Ti with C and the reaction progresses continuously, generating reaction heat so that the sintering process progresses in turn from the inside of the pressed body toward the surface thereof to form the sintered body having a size of nearly 25 ∅ x 25 Hmm.

Since it is difficult to obtain a compact sintered body by sintering a pressed body of TiC powders, the sintering according to the present invention is remarkably effective.

Example 2

The sintering according to the present invention is applied to Zr + C, Ta + C, Ti + 2B and Ti + Si under the same conditions as in Example 1. In every case, a compact sintered body can be obtained. In addition, a sintered body consisting of a solid solution $TiC_{0.7}N_{0.3}$ can be obtained by the reaction of Ti with C in an atmosphere of nitrogen gas.

Example 3

Ti powders, Ta powders and C powders are mixed at a molar ratio of 1 : 1 : 2 and then the resulting powdery mixture is sintered under the same conditions as in Example 1. A sintered body consisting of a solid solution $Ti_{0.5}Ta_{0.5}C$ can be obtained.

Example 4

Ti powders are mixed with C powders at a molar ratio of 1 : 1 and then Ni powders are added to the resulting powdery mixture at a ratio of 5% by weight. The finally obtained powdery mixture is pressed by a CIP method at a pressure of 5 t/cm² (490.3 M Pa) to form a sintered body having a size of 300 ∅ x 300 H. The resulting sintered body is heated by electrifying a carbon heater buried therein. The sintering process progresses from the central portion of the pressed body and a sintered body containing a remarkably small number of pores therein can be obtained. On the other hand, a non-uniform sintered body containing porous portions therewithin is obtained by pressing the composition TiC - 5% by weight Ni at a pressure of 5 t/cm² (490.3 M Pa) by a CIP method likewise and sintering the pressed body at 1,450° C.

## Claims

1.  A method of making a sintered ceramics body which comprises reacting a powder of at least one first element selected from silicon and metals of groups III, IVa, Va and VIa of the Periodic Table and at least one non-metallic second element, different from the first and selected from boron, carbon, nitrogen and silicon, by mixing the reactants, pressing the mixture to form a body, and heating a part of the pressed body to initiate an exothermic, synthetic reaction between said metallic and non-metallic powders and/or an exothermic reaction between said metallic powder and atmospheric gases and/or liquids, whereby the heat of reaction causes simultaneous sintering of the reaction product to produce a wholly sintered ceramics body, characterised in that the pressed body is locally heated from within to initiate the reaction, thereby causing the reaction to progress continuously towards the surface of the pressed body.

2.  A method according to claim 1 wherein the reaction mixture is subjected to an elevated pressure of 1000 kg/cm² (98.07 MPa) or more to form a pressed body having a porosity of 30% or less.

3.  A method according to claim 1 or claim 2 wherein the synthetic reaction is initiated by an electric carbon heater buried in the pressed body.

4.  A method according to any preceding claim wherein a ceramics powder, preferably a powder of the ceramics to be synthesized, is added to a mixture of said first and second elements as a diluent for the synthetic reaction, to control the speed of the synthetic reaction.

5.  A method according to any preceding claim, characterised in that the first element is a metallic element and is present in the powder mixture at a ratio larger than the stoichiometric ratio, whereby there is produced a matrix of said sintered ceramics with approximately spherical particles of non-reacted metal dispersed therein.

6.  A method according to claim 5, characterised in that the dispersed metallic phase constitutes 70% or less by volume of the resulting sintered body.

## Revendications

1.  Procédé de fabrication d'un corps en céramique fritté comprenant l'étape de faire réagir une poudre d'au moins un premier élément choisi parmi le silicium et les métaux des groupes III, IVa, Va et VIa du tableau périodique des éléments, et au moins un second élément non métallique, différent du premier et choisi parmi le bore, le carbone, l'azote et le silicium, en mélangeant les réactifs, en comprimant le mélange pour former un corps, et en chauffant une partie du corps comprimé pour initier une réaction de synthèse exothermique entre lesdites poudres métalliques et non métalliques, et/ou une réaction exothermique entre ladite poudre métallique et des gaz atmosphériques ou des liquides, de sorte que la chaleur de la réaction entraîne simultanément le frittage du produit de la réaction, de façon à produire un corps de céramique totalement fritté, caractérisé en ce que le corps comprimé est chauffé localement de l'intérieur pour initier la réaction, de sorte que la réaction progresse de façon continue vers la surface du corps comprimé.

2.  Procédé selon la revendication 1, dans lequel le mélange réactionnel est soumis à une pression élevée de 1 000 kg/cm2 (98,07 MPa) ou plus, pour former un corps comprimé ayant une porosité de 30% ou moins.

3.  Procédé selon la revendication 1 ou la revendication 2, dans lequel la réaction de synthèse est initiée par un corps chauffant électrique de carbone, noyé dans le corps comprimé.

4. Procédé selon l'une quelconque des revendications précédentes, dans lequel une poudre céramique, de préférence une poudre de la céramique à synthétiser, est ajoutée à un mélange desdits premier et second éléments pour servir de diluant à la réaction de synthèse, de façon à contrôler la vitesse de la réaction de synthèse.

5. Procédé selon une quelconque des revendications précédentes, caractérisé en ce que le premier élément est un élément métallique, et se trouve dans le mélange de poudres à une proportion supérieure à la proportion stoechiométrique, de sorte qu'il se produit une matrice de ladite céramique frittée, dans laquelle sont dispersées des particules approximativement sphériques de métal n'ayant pas réagi.

6. Procédé selon la revendication 5, caractérisé en ce que la phase métallique dispersée constitue 70% ou moins en volume du corps fritté résultant.

**Patentansprüche**

1. Verfahren zur Herstellung eines gesinterten Keramikkörpers, umfassend das Reagieren eines Pulvers aus mindestens einem ersten, aus Silizium und Metallen der Gruppen III, IVa, Va und VIa des periodischen Systems ausgewählten Element und aus mindestens einem zweiten, nichtmetallischen, von dem ersten verschiedenen und aus Bor, Kohlenstoff, Stickstoff und Silizium ausgewählten Element durch Mischen der Reagentien, Pressen der Mischung, um einen Körper zu bilden, und Aufheizen eines Teils des gepreßten Körpers, um eine exotherme, sysnthetische Reaktion zwischen den metallischen und nichtmetallischen Pulvern und/oder eine exotherme Reaktion zwischen dem Metallpulver und atmosphärischen Gasen und/oder Flüssigkeiten in Gang zu setzen, wobei die Reaktionswärme gleichzeitig das Sintern des Reaktionsproduktes bewirkt, um einen vollständig gesinterten Keramikkörper zu erzeugen, dadurch gekennzeichnet, daß der gepreßte Körper von innen örtlich erhitzt wird, um die Reaktion in Gang zu setzen, wodurch die Reaktion veranlaßt wird, kontinuierlich zu der Oberfläche des gepreßten Körpers hin fortzuschreiten.

2. Verfahren nach Anspruch 1, bei welchem die Reaktionsmischung einem erhöhten Druck von 1.000 kp/cm² (98,07 MPa) oder mehr unterworfen wird, um einen gepreßten Körper auszubilden, der eine Porosität von 30 % oder weniger aufweist.

3. Verfahren nach Anspruch 1 oder 2, bei welchem die synthetische Reaktion durch einen elektrischen, in dem gepreßten Körper verlegten Kohlenstoff-Heizteil in Gang gesetzt wird.

4. Verfahren nach einem der vorhergehenden Ansprüche, bei welchem ein keramisches Pulver, vorzugsweise ein Pulver aus der zu synthetisierenden Keramik, zu einer Mischung aus dem ersten und zweiten Element als Streckmittel für die synthetische Reaktion zugefügt wird, um die Geschwindigkeit der synthetischen Reaktion zu steuern.

5. Verfahren nach einem der vorhergehenden Ansprüche, dadurch gekennzeichnet, daß das erste Element ein metallisches Element und in der Pulvermischung in einem Verhältnis enthalten ist, das größer ist als das stöchiometrische Verhältnis, wodurch eine Matrix aus der gesinderten Keramik hergestellt wird mit annähernd sphärischen Teilchen aus nicht-reagiertem, darin dispergiertem Metall.

6. Verfahren nach Anspruch 5, dadurch gekennzeichnet, daß die dispergierte Metallphase 70 % oder weniger des Volumens des erzeugten Sinterkörpers ausmacht.

FIG !